# FASCICULE DE BREVET EUROPEEN

(11) **EP 2 230 155 B1**
(45) Date de publication et mention de la délivrance du brevet: **16.05.2012**
(21) Numéro de dépôt: 10155554.8
(22) Date de dépôt: 04.03.2010
(51) Int. Cl.: G08G 1/16, B62D 15/02, B62D 1/28, B60W 30/06

(54) **Procédé d'assistance à la sortie de stationnement d'un véhicule**
Verfahren zur Unterstützung beim Ausparken aus einer Parklücke
Assistance method for pulling out a vehicle of a parking spot

(30) Priorité: 19.03.2009 FR 0951748
(43) Date de publication de la demande: 22.09.2010
(73) Titulaire: Peugeot Citroën Automobiles SA, 78140 Vélizy-Villacoublay (FR)
(72) Inventeur: Pallier, Denis, 78990 Elancourt (FR)
(74) Mandataire: Vigand, Régis Louis Michel

(56) Documents cités:
- EP-A- 1 679 526
- EP-A- 1 935 739
- DE-A1- 10 306 108
- DE-A1-102005 006 965
- DE-A1-102005 061 909
- DE-A1-102007 036 251
- US-A1- 2005 285 758

## Description

L'invention concerne le domaine des procédés d'assistance au stationnement d'un véhicule et en particulier les procédés d'assistance à la sortie de stationnement d'un véhicule. Le procédé d'assistance à la sortie de stationnement d'un véhicule aide un conducteur à sortir son véhicule de l'emplacement de stationnement sur lequel son véhicule est garé, et peut même aller jusqu'à sortir le véhicule de son emplacement de stationnement à la place du conducteur. Ce procédé d'assistance est généralement activé à la demande du conducteur.

Une fois terminée la manoeuvre de sortie du véhicule hors de son emplacement de stationnement, le procédé rend la main au conducteur pour des raisons de sécurité, car ce n'est pas un système de pilotage automatique du véhicule dans une situation de roulage normal, notamment lorsque le véhicule roule sur une chaussée. D'une part, il ne faut pas que le procédé d'assistance rende la main trop tôt au conducteur, car sinon celui-ci risque de devoir, au moins dans certains cas, finir en partie la manoeuvre de sortie du véhicule hors de son emplacement de stationnement, ce qui lui sera fastidieux et lui rendra d'autant moins attractif son procédé d'assistance, avec en plus un risque de heurter un véhicule garé au voisinage du sien. D'autre part, il ne faut pas que le procédé d'assistance rende la main trop tard au conducteur, car sinon celui-ci risque de ne s'en apercevoir qu'une fois son véhicule à nouveau intégré dans la circulation et de ne pas forcément pouvoir réagir à temps en cas d'événement difficile, comme par exemple une voiture surgissant brusquement dans son voisinage.

Selon un art antérieur, par exemple décrit dans la demande de brevet DE 102007029773, il est prévu une condition de fin d'assistance permettant de rendre la main au conducteur une fois la manoeuvre de sortie de stationnement terminée. La condition de fin d'assistance prévue (paragraphe 17) est un seuil de vitesse de roulage d'une valeur de 15km/h. Le dispositif suppose que lorsque le véhicule roule à une vitesse ayant dépassé ce seuil, la manoeuvre de sortie de l'emplacement de stationnement est terminée. Pour un seuil de vitesse de 15km/h, c'est en effet probable ; néanmoins, à ce stade, le véhicule est déjà nettement engagé sur la chaussée et en cas de survenue inopinée d'un véhicule arrivant rapidement par l'arrière, cela risque d'être trop tard pour permettre d'éviter la collision.

Selon l'invention, ce seuillage de vitesse apparaît insuffisant. En effet, soit le seuil de vitesse est élevé, et la manoeuvre est sans doute terminée mais la main est rendue au conducteur de manière suffisamment tardive pour qu'il y ait un risque notable de collision en cas de survenue d'un événement imprévu, soit le seuil de vitesse est faible, et si le risque en matière de sécurité est diminué, c'est au détriment de l'ergonomie du procédé d'assistance qui risque de générer de fausses alertes obligeant le conducteur à finir la manoeuvre ou à relancer le procédé d'assistance.

DE 10 2007 036251 A1, considéré comme l'art antérieur le plus proche, révèle le préambule de la revendication 1.

L'invention cherche une condition de fin d'assistance qui permette à la fois, d'une part de ne rendre la main au conducteur que lorsque la manoeuvre est virtuellement terminée, c'est-à-dire lorsque le conducteur ne risque raisonnablement plus de heurter un autre véhicule garé au voisinage du sien, et d'autre part assez tôt après la fin de la manoeuvre de sortie pour que le véhicule ne soit pas trop engagé sur la chaussée et ne soit pas déjà trop impliqué dans la circulation, de manière à permettre au conducteur de mieux réagir à un événement difficile ou imprévu. De préférence, il s'agit pour le procédé d'assistance de rendre la main le plus tôt possible après la fin de la manoeuvre, idéalement dès que la manoeuvre est terminée, au conducteur du véhicule. Pour cela, l'invention utilise la variation de la distance inter-véhicule, c'est-à-dire la variation d'une distance ou de plusieurs distances entre d'une part le véhicule que le procédé d'assistance selon l'invention est en train de faire sortir de son emplacement de stationnement et d'autre part un véhicule adjacent, c'est-à-dire un véhicule qui est garé juste à côté du véhicule assisté par ce procédé d'assistance. L'utilisation de ce paramètre de variation de distance inter véhicules permet de rendre la main au conducteur plus tôt que la seule utilisation d'un seuil de vitesse. De préférence aucun seuil de vitesse n'est utilisé dans le procédé d'assistance selon l'invention.

Selon l'invention, il est prévu un procédé d'assistance à la sortie de stationnement d'un véhicule, comprenant une évaluation de distance entre ledit véhicule et un véhicule adjacent et une condition de fin d'assistance, caractérisé en ce que la variation de distance évaluée est un paramètre de détermination de ladite condition de fin d'assistance.

De préférence, la variation de distance évaluée réalisant ladite condition de fin d'assistance correspond à l'estimation d'une suppression de risque de collision entre le coin dudit véhicule et le coin du véhicule adjacent qui sont les plus proches l'un de l'autre en fin de sortie de stationnement. Ainsi, lorsque, en cas de reprise en main du véhicule par le conducteur à ce moment là, celui-ci fait avancer le véhicule, il ne risque à priori plus de heurter le véhicule situé juste à côté de son véhicule, juste devant son véhicule pour une sortie par l'avant d'un emplacement de stationnement en créneau. Dans le cas d'un stationnement en créneau avec sortie par l'avant du véhicule hors de son emplacement de stationnement, le risque de heurt est pratiquement supprimé, pour le cas d'un stationnement sur la droite de la chausse dans le sens de la marche lorsque le coin avant droit du véhicule du conducteur a dépassé le coin arrière gauche du véhicule garé juste devant, pour le cas d'un stationnement sur la gauche de la chausse dans le sens de la marche lorsque le coin avant gauche du véhicule du conducteur a dépassé le coin arrière droit du véhicule garé juste devant. La fin de sortie de stationnement signifie que l'avant du véhicule va pouvoir complètement sortir de l'emplacement de stationnement sans autre inversion du sens de pilotage du système de direction lorsque le procédé d'assistance pilote le système de direction du véhicule. La fin de sortie de stationnement est donc la phase de sortie du véhicule après la dernière inversion du sens de pilotage du système de direction du véhicule.

De préférence, ladite variation de distance évaluée détermine la condition de fin d'assistance. Cette variation de distance est alors le principal paramètre, le paramètre essentiel, qui va déterminer la condition de fin d'assistance, même si cette variation de distance peut être modulée ou corrigée par d'autres paramètres. Pour certaines variations de distance, le procédé d'assistance considérera que la condition de fin d'assistance est réalisée, tandis que pour d'autres variations de distance, le procédé d'assistance considérera que la condition de fin d'assistance n'est pas réalisée ou pas encore réalisée. Cette variation de distance peut aussi être le seul et unique paramètre de détermination de la condition de fin d'assistance.

De préférence, la variation de distance évaluée est modulée par la valeur de l'angle de braquage au volant dudit véhicule. Dans une première réalisation, l'effet de l'angle de braquage au volant est annulé dans la mesure où la distance inter véhicules est recalculée en corrigeant l'effet de l'angle de braquage au volant, c'est-à-dire en analysant la variation de la distance inter véhicules qu'il y aurait eu si le véhicule avançait tout droit. Dans une deuxième réalisation, il est simplement tenu compte de l'angle de braquage au volant qui modifie la variation de distance inter véhicules par rapport à une progression en ligne droite. Avec l'évolution de l'angle de braquage au volant, on anticipe son influence sur la courbe de variation de la distance inter véhicules qui aurait dû réaliser la condition de fin d'assistance si le véhicule avait progressé en ligne droite, et on adapte la condition de fin d'assistance à la nouvelle courbe de variation de distance inter véhicules. Une augmentation de l'angle de braquage au volant pour sortir de la place de stationnement en fin de manoeuvre aura tendance à réduire la variation de distance inter véhicules dans un premier temps pour l'augmenter dans un second temps.

De préférence, le procédé d'assistance est un procédé d'assistance à la sortie de stationnement en créneau. En effet, même si le procédé d'assistance peut être envisagé pour d'autres types de stationnement, comme en bataille ou en épi, c'est pour sortir d'un stationnement en créneau qu'il est le plus efficace parce que c'est la sortie d'un stationnement en créneau qui se révèle la manoeuvre de sortie la plus délicate, en particulier lorsque les véhicules garés devant et derrière votre véhicule, sont très proches du votre. Par ailleurs, le véhicule dispose souvent déjà de capteurs de distance latérale assez précis, souvent situés au niveau des ailes avant du véhicule, plus précis que les capteurs de distance frontale avants ou arrières. Or dans un stationnement en créneau, la distance qu'il est utile de mesurer est justement une distance latérale entre l'aile avant du véhicule d'une part et le véhicule adjacent d'autre part. Le procédé d'assistance selon l'invention est par conséquent particulièrement bien adapté à la sortie de stationnement en créneau. Avantageusement, le véhicule adjacent est le véhicule garé juste devant ledit véhicule. En effet, sortir du créneau par l'arrière est moins sécurisé ; or le procédé d'assistance selon l'invention cherche à améliorer la sécurité de la manoeuvre.

De préférence, le procédé d'assistance pilote le système de direction dudit véhicule et la réalisation de la condition de fin d'assistance rend la main au conducteur du véhicule. Le procédé d'assistance à la sortie de stationnement du véhicule rend la main au conducteur en cessant de piloter le système de direction dudit véhicule, ce qui va inciter le conducteur à s'en saisir à nouveau. Le procédé d'assistance peut soit complètement laisser le système de direction du véhicule à la commande manuelle du conducteur, soit continuer au moins à assister passivement le conducteur dans son maniement du système de direction du véhicule mais sans plus prendre aucune initiative, comme par exemple simplement assumer une fonction de direction assistée.

De préférence, la variation de distance évaluée réalisant ladite condition de fin d'assistance implique au moins une inversion dans le sens de variation de la distance évaluée au cours d'une période pendant laquelle le sens de déplacement dudit véhicule reste le même. Dans le cas d'une sortie par l'avant d'un stationnement en créneau, le sens de variation de la distance inter véhicules, doit au moins diminuer puis augmenter, pendant que le véhicule avance. Une diminution de distance inter véhicules en marche avant puis une augmentation de distance inter véhicules en marche arrière, ne signifierait pas que le véhicule du conducteur s'est dégagé du véhicule garé devant lui, mais simplement qu'il effectue des allers et retours entre les deux véhicules qui l'encadrent dans son emplacement de stationnement.

Une première façon de détecter si le véhicule avance ou recule peut être la position du levier de vitesse. Cette première façon est fiable en plat, mais elle risque de poser quelques problèmes pour un stationnement en pente, puisqu'il peut suffire de débrayer avec la première vitesse enclenchée pour reculer sans avoir besoin de passer la marche arrière. Une deuxième façon plus intéressante de détecter si le véhicule avance ou recule peut être l'analyse du signal issu d'un capteur de vitesse de roue signée, permettant de dire si le véhicule avance ou recule, et ceci, que le véhicule soit une chaussée plate ou en pente. Cette deuxième façon ne nécessitera souvent guère de surcoût dans la mesure où les véhicules tendent de plus en plus à être équipés pour d'autres raisons d'un capteur de vitesse de roue signée pouvant donner la vitesse et le sens de rotation de la roue correspondante. De préférence, le sens de déplacement dudit véhicule est déterminé à partir d'au moins un capteur de vitesse de rotation de roue signée dudit véhicule.

Pour un coin de véhicule adjacent, c'est-à-dire garé devant le véhicule du conducteur lorsque celui-ci est stationné en créneau, de forme régulière, c'est-à-dire telle que la courbe extérieure du véhicule vue de dessus ne présente pas de point d'inflexion, ce qui est le cas d'une forme carrée ou arrondie, mais pas le cas d'une forme présentant une partie rentrante dans la zone du coin, une diminution de la distance inter véhicules suivie d'une augmentation de la distance inter véhicules suffisent pour révéler que le véhicule du conducteur s'est dégagé du véhicule adjacent. Par contre, pour des formes plus irrégulières, plusieurs successions diminution puis augmentation de la distance inter véhicules peuvent être nécessaires. Pour déterminer à partir de combien de successions diminution puis augmentation de la distance inter véhicules, le véhicule du conducteur peut enfin être considéré comme dégagé du véhicule adjacent, c'est-à-dire être considéré comme ne plus devoir à priori le heurter, un filtrage peut être au moins utile voire nécessaire. Un risque de heurt ou de collision à priori supprimé signifie que, sauf manoeuvre totalement inadaptée du conducteur comme un brusque coup de volant à droite alors qu'il se dégage d'un véhicule sur sa droite, le heurt ou la collision doit être évité. Cela implique notamment qu'en continuant à avancer avec le même angle de braquage au volant, le véhicule du conducteur doit éviter la collision avec le véhicule adjacent dont il s'est dégagé. Préférentiellement, pour réaliser ladite condition de fin d'assistance, le nouveau sens de variation de la distance évaluée, après ladite inversion, doit rester le même pendant une longueur minimale de déplacement dudit véhicule excluant que ladite inversion n'ait été causée que par des variations de forme extérieure du véhicule adjacent. Ainsi, une forme rentrante à un endroit du coin du véhicule adjacent sera insuffisante pour valider l'inversion dans le sens de variation de la distance évaluée au cours d'une période pendant laquelle le sens de déplacement dudit véhicule reste le même. Pour une forme de coin de véhicule adjacent en biseau, une simple stagnation après une diminution de la distance inter véhicules peut être suffisante pour réaliser la condition de fin d'assistance. Il peut même être envisagé que les capteurs de distance frontale du véhicule du conducteur construisent l'équivalent d'une image radar du véhicule adjacent, image radar à partir de laquelle serait déterminé à quel moment de la variation de la distance inter véhicules, le véhicule du conducteur pourrait être considéré comme dégagé du véhicule adjacent, l'atteinte de ce moment réalisant la condition de fin d'assistance. Une autre façon de faire serait la lecture d'une base de données après avoir identifié le modèle du véhicule adjacent. Avantageusement, ladite longueur minimale est déterminée à partir d'une estimation des variations de forme extérieure du véhicule adjacent réalisée pendant le déroulement du procédé d'assistance. Dans une alternative, cette longueur minimale peut être prédéterminée, et choisie de manière à tenir compte de toutes les formes plausibles de coin de véhicule usuel.

Pour anticiper l'effet de l'angle de braquage au volant, il est tenu compte du fait que plus l'angle de braquage au volant augmente en phase finale de sortie hors de l'emplacement de stationnement, moins vite va diminuer la distance inter véhicules avant que le véhicule se soit dégagé du véhicule adjacent, c'est-à-dire ne risque à priori plus de le heurter, et plus vite va à nouveau augmenter la distance inter véhicules après que le véhicule se soit enfin dégagé du véhicule adjacent. On pourrait même imaginer, avec un angle de braquage au volant extrême, qu'au lieu de diminuer puis d'augmenter, la distance inter véhicules augmente lentement puis augmente beaucoup plus rapidement, cette rupture de pente dans la rapidité d'augmentation de la distance inter véhicules jouerait alors le même rôle que le changement de sens de variation de la distance inter véhicules décrit précédemment.

De préférence, la fin du procédé d'assistance est provoquée par la transmission, sur le réseau électrique de bord dudit véhicule, d'une information en provenance d'un capteur de distance et à destination du système de pilotage de direction dudit véhicule. L'information provient préférentiellement d'un calculateur regroupant l'ensemble des informations issues des différents capteurs de distance, que ce soient des capteurs de distance latérale ou des capteurs de distance frontale. Le calculateur est associé au capteur de distance latérale ; il peut également être associé à d'autres capteurs de distance, par exemple frontale. Lorsque la condition de fin d'assistance est réalisée, la seule transmission de cette information suffit à mettre effectivement fin au procédé d'assistance à la sortie de stationnement du véhicule du conducteur. Cette évolution, uniquement logicielle, par exemple du calculateur regroupant les informations issues des capteurs de distance, est particulièrement simple à mettre en oeuvre. Le système d'assistance à la sortie de stationnement sera prévu pour pouvoir consommer cette information de fin d'assistance, c'est-à-dire cette information de demande de désactivation du procédé d'assistance. Selon une réalisation avantageuse, ladite transmission d'information consiste à cesser d'envoyer la valeur de la distance évaluée vers le système de pilotage de direction dudit véhicule.

De préférence, la variation de distance évaluée est mesurée par au moins un capteur de distance latérale dudit véhicule. Le capteur de distance latérale du véhicule est particulièrement bien adapté pour un procédé d'assistance à la sortie de stationnement d'un véhicule garé en créneau. Bon nombre de véhicules possédant un système d'assistance à la sortie de stationnement comprennent déjà un capteur de distance latérale, avantageusement de chaque côté du véhicule, au niveau des ailes avant, qui est utilisé pour mesurer la longueur d'un emplacement de stationnement en créneau. Un mode de sélection du bon capteur de distance latérale par le procédé d'assistance à la sortie de stationnement selon l'invention, pourra alors consister à choisir le capteur de distance latérale qui est situé du même côté que le clignotant activé par le conducteur pour se garer.

Avantageusement, la variation de distance évaluée est mesurée par au moins un capteur de distance à ultrasons. D'autres types de capteur de distance comme des capteurs optiques de type caméra ou lidar pourraient être utilisés. Le capteur à ultrasons est celui qui nécessite le plus particulièrement une condition de fin d'assistance, car il ne permet pas aussi bien que les capteurs optiques au conducteur de se rendre compte par lui-même quand il doit reprendre la main. Par ailleurs, il est particulièrement simple et peu coûteux.

Un véhicule est un moyen de transport. Un véhicule inclut notamment un camion, une moto, un avion, un bateau, un train. Un véhicule est de préférence une voiture.

L'invention va maintenant être décrite plus en détail à l'aide des figures ci-après, données à titre d'exemples illustratifs et non limitatifs, où :

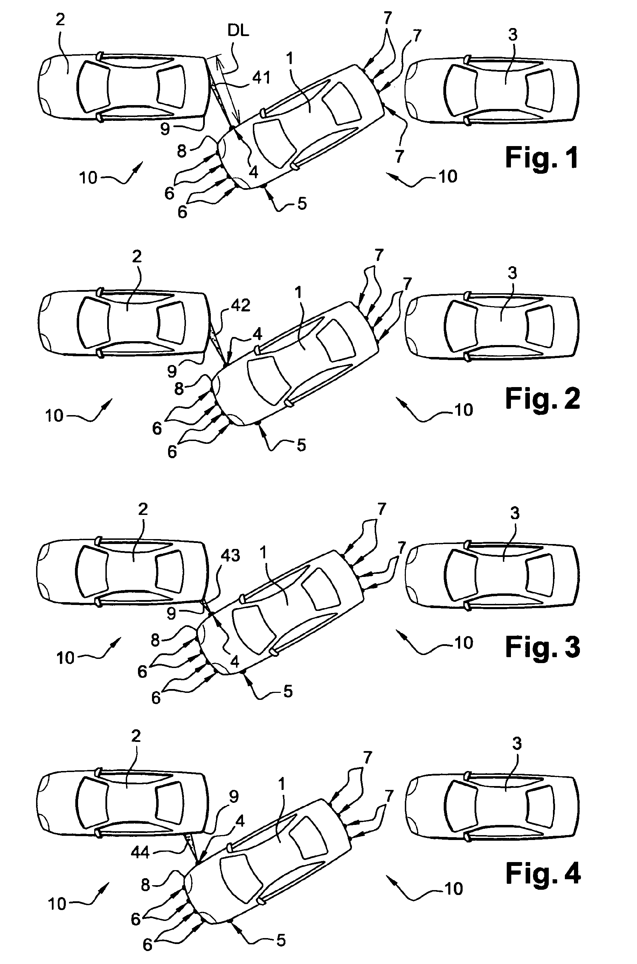

- les figures 1 à 4 représentent schématiquement un exemple, respectivement d'une première, d'une deuxième, d'une troisième et d'une quatrième, phases de déroulement du procédé d'assistance à la sortie de stationnement d'un véhicule selon l'invention.

La figure 1 représente schématiquement un exemple d'une première phase de déroulement du procédé d'assistance à la sortie de stationnement d'un véhicule selon l'invention. Un véhicule 1, véhicule du conducteur équipé d'un système mettant en oeuvre le procédé d'assistance à la sortie de stationnement selon l'invention, est en train de commencer à quitter par l'avant son emplacement de stationnement en créneau qui est situé entre les véhicules 2 et 3. Le véhicule 2 garé devant le véhicule 1 est le véhicule adjacent dont il s'agit pour le véhicule 1 de pouvoir se dégager afin de rendre ensuite la main au conducteur du véhicule 1. Le véhicule 3 est garé derrière le véhicule 1. Le véhicule 1 comporte deux capteurs de distance latéraux, un capteur 4 de distance latérale droit et un capteur 5 de distance latérale gauche, disposés en partie avant des ailes avant du véhicule 1 , près de la face avant du véhicule 1. Le véhicule 1 comporte plusieurs capteurs 6 de distance frontale avants, par exemple quatre, disposés à l'avant du véhicule 1, et plusieurs capteurs 7 de distance frontale arrières, par exemple quatre, disposés à l'arrière du véhicule 1. Les capteurs 4 et 5 de distance latérale ont une portée supérieure aux capteurs 6 et 7 de distance frontale, leur cône d'émission étant plus étroit. En fin de manoeuvre de sortie de stationnement, les capteurs 4 et 5 de distance latérale vont pouvoir mesurer la distance latérale DL entre le côté du véhicule 1 et le véhicule adjacent 2.

Comme les emplacements de stationnement sont situés sur la droite de la chaussée 10, le véhicule 1 sera considéré comme dégagé du véhicule 2, lorsque le coin avant droit 8 du véhicule 1 ne risquera à priori plus d'entrer en contact avec le coin arrière gauche 9 du véhicule 2. C'est le capteur 4 de distance latérale droit qui est activé et qui mesure la distance latérale DL.

Après plusieurs allers et retours entre les véhicules 2 et 3, le véhicule 1 commence à sortir son coin avant gauche sur la chaussée 10, mais il risque toujours d'accrocher son coin avant droit 8 avec l'arrière du véhicule 2. Optionnellement, lorsque le véhicule 1 entame son dernier mouvement vers l'avant, les capteurs 6 de distance frontale avant mesurent leurs distances respectives au véhicule 2, ce qui permet ici d'en déduire que le coin arrière gauche 9 du véhicule est de forme régulière et qu'une seule inversion dans la variation de distance inter véhicules, c'est-à-dire une seule inversion dans la variation de distance entre le véhicule 1 et le véhicule adjacent 2 mesurée par le capteur 4 de distance latérale droit, sera suffisante pour réaliser la condition de fin d'assistance et rendre la main au conducteur du véhicule 1. Cette inversion dans la variation de distance inter véhicules doit se réaliser pendant que le véhicule 1 reste en marche avant, puisque la sortie de l'emplacement de stationnement en créneau se fait par l'avant. Le capteur 4 de distance latérale droit mesure une distance latérale 41 entre le véhicule 1 et le véhicule 2.

La figure 2 représente schématiquement un exemple d'une deuxième phase de déroulement du procédé d'assistance à la sortie de stationnement d'un véhicule selon l'invention. Le véhicule 1 a continué d'avancer. Le capteur 4 de distance latérale droit mesure maintenant une distance latérale 42 entre le véhicule 1 et le véhicule 2. La distance latérale 42 est inférieure à la distance latérale 41. La distance inter véhicules est donc en train de diminuer.

La figure 3 représente schématiquement un exemple d'une troisième phase de déroulement du procédé d'assistance à la sortie de stationnement d'un véhicule selon l'invention. Le véhicule 1 a encore continué d'avancer. Le capteur 4 de distance latérale droit mesure maintenant une distance latérale 43 entre le véhicule 1 et le véhicule 2. La distance latérale 43 est inférieure à la distance latérale 42. La distance inter véhicules continue donc à diminuer.

La figure 4 représente schématiquement un exemple d'une quatrième phase de déroulement du procédé d'assistance à la sortie de stationnement d'un véhicule selon l'invention. Le véhicule 1 a encore continué d'avancer. Le capteur 4 de distance latérale droit mesure maintenant une distance latérale 44 entre le véhicule 1 et le véhicule 2. La distance latérale 44 est par contre supérieure à la distance latérale 43. La distance inter véhicules est donc maintenant en train d'augmenter. Cela fait d'ailleurs un petit moment qu'elle augmente constamment depuis la mesure de la distance latérale 43, proche de la distance inter véhicules minimale pendant la manoeuvre de sortie du stationnement. Optionnellement, si le seuil de longueur minimale de déplacement était utilisé, on pourrait donc constater qu'il est respecté.

Lors de la mesure des distances latérales 41 à 44 par le capteur 4, le véhicule 1 a tout le temps continué à avancer. A partir de la mesure de distance latérale 44 supérieure à la distance latérale 43, le procédé d'assistance à la sortie de stationnement sait que le coin avant droit 8 du véhicule 1 vient de dépasser vers l'avant, le coin arrière gauche 9 du véhicule adjacent 2. Le procédé d'assistance peut alors en déduire que le véhicule 1 s'est dégagé du véhicule adjacent 2 garé devant lui. Le procédé d'assistance peut maintenant à tout moment, et le plus tôt sera le mieux, rendre la main au conducteur du véhicule 1. Pour cela, le procédé d'assistance va faire cesser l'envoi de la valeur de la distance latérale DL issue du capteur 4. Le système de pilotage de direction du véhicule 1, ne recevant plus cette information de distance latérale DL, va se désactiver. Le conducteur du véhicule 1 devra alors reprendre en main son véhicule 1.

## Revendications

1. Procédé d'assistance à la sortie de stationnement d'un véhicule (1), comprenant une évaluation de distance (DL) entre ledit véhicule (1) et un véhicule adjacent (2) et une condition de fin d'assistance, **caractérisé en ce que** la variation de distance évaluée (DL) est un paramètre de détermination de ladite condition de fin d'assistance, et **en ce que** la variation de distance évaluée (DL) réalisant ladite condition de fin d'assistance implique au moins une inversion dans le sens de variation de la distance évaluée (DL) au cours d'une période pendant laquelle le sens de déplacement dudit véhicule (1) reste le même.

2. Procédé d'assistance selon la revendication 1 , **caractérisé en ce que** ladite variation de distance évaluée (DL) détermine la condition de fin d'assistance.

3. Procédé d'assistance selon l'une quelconque des revendications précédentes, **caractérisé en ce que** le procédé d'assistance est un procédé d'assistance à la sortie de stationnement en créneau.

4. Procédé d'assistance selon la revendication 3, **caractérisé en ce que** le véhicule adjacent (2) est le véhicule garé juste devant ledit véhicule (1).

5. Procédé d'assistance selon l'une quelconque des revendications précédentes, **caractérisé en ce que** le procédé d'assistance pilote le système de direction dudit véhicule (1) et **en ce que** la réalisation de la condition de fin d'assistance rend la main au conducteur du véhicule (1).

6. Procédé d'assistance selon l'une quelconque des revendications précédentes, **caractérisé en ce que** la variation de distance évaluée (DL) réalisant ladite condition de fin d'assistance correspond à l'estimation d'une suppression de risque de collision entre le coin (8) dudit véhicule, (1) et le coin (9) du véhicule adjacent (2) qui sont les plus proches l'un de l'autre en fin de sortie de stationnement.

7. Procédé d'assistance selon l'une quelconque des revendications précédentes, **caractérisé en ce que**, pour réaliser ladite condition de fin d'assistance, le nouveau sens de variation de la distance évaluée (DL), après ladite inversion, doit rester le même pendant une longueur minimale de déplacement dudit véhicule (1) excluant que ladite inversion n'ait été causée que par des variations de forme extérieure du véhicule adjacent (2).

8. Procédé d'assistance selon la revendication 7, **caractérisé en ce que** ladite longueur minimale est déterminée à partir d'une estimation des variations de forme extérieure du véhicule adjacent (2) réalisée pendant le déroulement du procédé d'assistance.

9. Procédé d'assistance selon l'une quelconque des revendications précédentes, **caractérisé en ce que** le sens de déplacement dudit véhicule (1) est déterminé à partir d'au moins un capteur de vitesse de rotation de roue signée dudit véhicule (1).

10. Procédé d'assistance selon l'une quelconque des revendications précédentes, **caractérisé en ce que** la fin du procédé d'assistance est provoquée par la transmission, sur le réseau électrique de bord dudit véhicule (1), d'une information en provenance d'un capteur de distance et à destination du système de pilotage de direction dudit véhicule (1).

11. Procédé d'assistance selon la revendication 10, **caractérisé en ce que** ladite transmission d'information consiste à cesser d'envoyer la valeur de la distance évaluée (DL) vers le système de pilotage de direction dudit véhicule (1).

12. Procédé d'assistance selon l'une quelconque des revendications précédentes, **caractérisé en ce que** la variation de distance évaluée (DL) est modulée par la valeur de l'angle de braquage au volant dudit véhicule (1).

13. Procédé d'assistance selon l'une quelconque des revendications précédentes, **caractérisé en ce que** la variation de distance évaluée (DL) est mesurée par au moins un capteur de distance latérale dudit véhicule (1).

14. Procédé d'assistance selon l'une quelconque des revendications précédentes, **caractérisé en ce que** la variation de distance évaluée (DL) est mesurée par au moins un capteur de distance à ultrasons.

## Claims

1. Method for assisting the process of driving a vehicle (1) out of a parking space, comprising an evaluation of a distance (DL) between said vehicle (1) and an adjacent vehicle (2) and comprising an assistance termination condition, **characterised in that** the variation in evaluated distance (DL) is a parameter for determining said assistance termination condition, and **in that** the variation in evaluated distance (DL) which meets said assistance termination condition involves at least one reversal of the direction of variation in the evaluated distance (DL) over a period in which the direction of displacement of said vehicle (1) remains constant.

2. Assistance method according to claim 1, **characterised in that** said variation in evaluated distance (DL) determines the assistance termination condition.

3. Assistance method according to either of the preceding claims, **characterised in that** the assistance method is a method for assisting the process of driving out of a parallel parking space.

4. Assistance method according to claim 3, **characterised in that** the adjacent vehicle (2) is the vehicle parked immediately in front of said vehicle (1).

5. Assistance method according to any one of the preceding claims, **characterised in that** the assistance method controls the steering system of said vehicle (1), and **in that** meeting the assistance termination condition causes control to be returned to the driver of the vehicle (1).

6. Assistance method according to any one of the preceding claims, **characterised in that** the variation in evaluated distance (DL) which meets said assistance termination condition corresponds to the estimation that a risk of collision has been eliminated between the corner (8) of said vehicle (1) and the corner (9) of the adjacent vehicle (2) which are closest to one another at the end of the process of driving out of a parking space.

7. Assistance method according to any one of the preceding claims, **characterised in that**, to meet said assistance termination condition, the new direction of variation in the evaluated distance (DL), after said reversal, has to stay the same for a minimum length of displacement of said vehicle (1), unless said reversal was brought about only by variations in the external shape of the adjacent vehicle (2).

8. Assistance method according to claim 7, **characterised in that** said minimum length is determined from an estimation, performed while the assistance method is being carried out, of the variations in the external shape of the adjacent vehicle (2).

9. Assistance method according to any one of the preceding claims, **characterised in that** the direction of displacement of said vehicle (1) is determined from at least one signed wheel rotational speed sensor of said vehicle (1).

10. Assistance method according to any one of the preceding claims, **characterised in that** the assistance method is terminated by transmitting information on the on-board electrical wiring system of said vehicle (1), from a distance sensor to the steering control system of said vehicle (1).

11. Assistance method according to claim 10, **characterised in that** said information transmission involves ceasing to send the evaluated distance (DL) value to the steering control system of said vehicle (1).

12. Assistance method according to any one of the preceding claims, **characterised in that** the variation in evaluated distance (DL) is modulated by the value of the turning angle at the steering wheel of said vehicle (1).

13. Assistance method according to any one of the preceding claims, **characterised in that** the variation in evaluated distance (DL) is measured by at least one lateral distance sensor of said vehicle (1).

14. Assistance method according to any one of the preceding claims, **characterised in that** the variation in evaluated distance (DL) is measured by at least one ultrasound distance sensor.

## Patentansprüche

1. Verfahren zur Unterstützung beim Ausparken eines Fahrzeugs (1), umfassend eine Auswertung eines Abstands (DL) zwischen dem Fahrzeug (1) und einem benachbarten Fahrzeug (2) und eine Bedingung für das Ende der Unterstützung, **dadurch gekennzeichnet, dass** die Veränderung des ausgewerteten Abstands (DL) ein Parameter zur Bestimmung der Bedingung für das Ende der Unterstützung ist und dass die Veränderung des ausgewerteten Abstands (DL), welche die Bedingung für das Ende der Unterstützung realisiert, zumindest eine Umkehr in der Richtung der Veränderung des ausgewerteten Abstands (DL) im Laufe eines Zeitraums bedingt, während dessen die Bewegungsrichtung des Fahrzeugs (1) gleich bleibt.

2. Unterstützungsverfahren nach Anspruch 1, **dadurch gekennzeichnet, dass** die Veränderung des ausgewerteten Abstands (DL) die Bedingung für das Ende der Unterstützung bestimmt.

3. Unterstützungsverfahren nach einem der vorhergehenden Ansprüche, **dadurch gekennzeichnet, dass** das Unterstützungsverfahren ein Verfahren zur Unterstützung beim Ausparken aus Parallelparklücken.

4. Unterstützungsverfahren nach Anspruch 3, **dadurch gekennzeichnet, dass** das benachbarte Fahrzeug (2) das Fahrzeug ist, das direkt vor dem Fahrzeug (1) geparkt ist.

5. Unterstützungsverfahren nach einem der vorhergehenden Ansprüche, **dadurch gekennzeichnet, dass** das Unterstützungsverfahren das Lenksystem des Fahrzeugs (1) steuert und dass die Realisierung der Bedingung für das Ende der Unterstützung die Kontrolle an den Fahrer des Fahrzeugs (1) übergibt.

6. Unterstützungsverfahren nach einem der vorhergehenden Ansprüche, **dadurch gekennzeichnet, dass** die Veränderung des ausgewerteten Abstands (DL), welche die Bedingung für das Ende der Unterstützung realisiert, der Abschätzung einer Beseitigung der Kollisionsgefahr zwischen der Ecke (8) des Fahrzeugs (1) und der Ecke (9) des benachbarten Fahrzeugs (2), die bei Beendigung des Ausparkens zueinander am nächsten sind, entspricht.

7. Unterstützungsverfahren nach einem der vorhergehenden Ansprüche, **dadurch gekennzeichnet, dass**, um die Bedingung für das Ende der Unterstützung zu realisieren, die neue Richtung der Veränderung des ausgewerteten Abstands (DL), nach der Umkehr, während einer Mindestlänge der Bewegung des Fahrzeugs (1) gleich bleiben muss, wodurch ausgeschlossen wird, dass die Umkehr nur durch Veränderungen der äußeren Form des benachbarten Fahrzeugs (2) bewirkt wurde.

8. Unterstützungsverfahren nach Anspruch 7, **dadurch gekennzeichnet, dass** die Mindestlänge ausgehend von einer Abschätzung der Veränderungen der äußeren Form des benachbarten Fahrzeugs (2) bestimmt wird, die während des Ablaufs des Unterstützungsverfahrens durchgeführt wird.

9. Unterstützungsverfahren nach einem der vorhergehenden Ansprüche, **dadurch gekennzeichnet, dass** die Bewegungsrichtung des Fahrzeugs (1) ausgehend von mindestens einem Sensor des Fahrzeugs (1) bestimmt wird, der eine vorzeichenbehaftete Raddrehzahl liefert.

10. Unterstützungsverfahren nach einem der vorhergehenden Ansprüche, **dadurch gekennzeichnet, dass** das Ende des Unterstützungsverfahrens durch die Übertragung einer Information über das elektrische Bordnetz des Fahrzeugs (1) bewirkt wird, die von einem Abstandssensor kommt und für das Lenksystem des Fahrzeugs (1) bestimmt ist.

11. Unterstützungsverfahren nach Anspruch 10, **dadurch gekennzeichnet, dass** die Informationsübertragung darin besteht, die Sendung des Wertes des ausgewerteten Abstands (DL) in Richtung des Lenksystems des Fahrzeugs (1) zu unterbrechen.

12. Unterstützungsverfahren nach einem der vorhergehenden Ansprüche, **dadurch gekennzeichnet, dass** die Veränderung des ausgewerteten Abstands (DL) durch den Wert des Lenkradeinschlags des Lenkrads des Fahrzeugs (1) moduliert wird.

13. Unterstützungsverfahren nach einem der vorhergehenden Ansprüche, **dadurch gekennzeichnet, dass** die Veränderung des ausgewerteten Abstands (DL) durch mindestens einen Seitenabstandssensor des Fahrzeugs (1) gemessen wird.

14. Unterstützungsverfahren nach einem der vorhergehenden Ansprüche, **dadurch gekennzeichnet, dass** die Veränderung des ausgewerteten Abstands (DL) durch mindestens einen Ultraschall-Abstandssensor gemessen wird.
